# EUROPÄISCHE PATENTSCHRIFT

(11) **EP 2 439 513 B1**
(45) Veröffentlichungstag und Bekanntmachung des Hinweises auf die Patenterteilung: **14.02.2018**
(21) Anmeldenummer: 11004829.5
(22) Anmeldetag: 14.06.2011
(51) Int. Cl.: G01N 21/55, G01N 15/06, G01N 27/02, G01N 27/04, G01N 1/22

(54) **VERFAHREN UND VORRICHTUNG ZUR DETEKTION VON SCHIMMELPILZSPOREN IN RAUMLUFT**
METHOD AND DEVICE FOR DETECTING MOULD SPORES IN AMBIENT AIR
PROCÉDÉ ET DISPOSITIF DE DÉTECTION DE SPORES DE MOISISSURE DANS L'AIR AMBIANT

(30) Priorität: 06.10.2010 DE 102010047465
(43) Veröffentlichungstag der Anmeldung: 11.04.2012
(73) Patentinhaber: ista International GmbH, 45131 Essen (DE)
(72) Erfinder: Monschau, Werner, 53879 Euskirchen (DE)
(74) Vertreter: Cohausz Hannig Borkowski Wißgott

(56) Entgegenhaltungen:
- WO-A1-2010/107979
- DE-A1- 10 148 750
- US-A1- 2004 108 274

## Beschreibung

Die Erfindung betrifft ein Verfahren zur Detektion von Schimmelpilzsporen in Raumluft sowie eine Messvorrichtung zur Schimmelpilzdetektion.

Im Stand der Technik ist es bekannt, dass Schimmelpilze, insbesondere deren Sporen, in der Raumluft für Menschen und andere Lebewesen eine Gesundheitsgefährdung darstellen, da solche Sporen aufgrund ihrer geringen Größe in einem Bereich von beispielsweise 0,1 - 20 Mikrometer über weite Strecken im Luftzug transportiert werden können und lungengängig sind, d.h. von Menschen und Tieren, die dieser Luft ausgesetzt sind, über die Atemluft eingeatmet werden können und so die Gesundheit negativ beeinflussen.

Weiterhin ist es bekannt, dass durch die zunehmende Sensibilisierung bezüglich Energiekosten bzw. des allgemein steigenden Umweltbewusstseins moderne Gebäude eine hohe Luftdichtigkeit aufweisen, so dass, sofern nicht ein zwangsweise hervorgerufener Luftaustausch gegeben ist, das Risiko des Auftretens von Schimmelpilzen in solchen Gebäuden erhöht ist. Auch an anderen Gebäuden steigt das Risiko der Schimmelpilzbildung und des Eintrags von Schimmelpilzsporen in die Atemluft erheblich, wenn die Feuchtigkeit im Gebäude steigt und keine ausreichenden Gegenmaßnahmen durch Lüftungsvorgänge vorgenommen werden.

Es ist dabei weiterhin als problematisch bekannt, dass dann, wenn durch die Benutzer die Kontamination von Räumen durch Schimmelpilze bzw. deren Sporen optisch wahrgenommen wird, bereits erhebliche Sanierungsmaßnahmen nötig werden, um die Räume bzw. Gebäude wiederum von den Schimmelpilzen zu befreien.

Die internationale Patentanmeldung WO 2010/107979 A beschreibt ein Verfahren zur Detektion von Schimmelpilzsporen in Raumluft. Dabei wird ein zumindest teilweise transparentes Substrat aus einem Zellulosematerial, das das Wachstum von Schimmelpilzen fördert, der Raumluft ausgesetzt. Mittels einer Lichtquelle und eines Lichtdetektors wird die Lichtdurchlässigkeit des Substrats, die mit dem Wachstum von Schimmel abnimmt, gemessen.

Es ist daher die Aufgabe der Erfindung, ein Verfahren und eine Messvorrichtung bereit zu stellen, mit der bereits möglichst frühzeitig Schimmelpilzsporen in Raumluft detektiert werden können, insbesondere um anhand eines solchen Detektionsergebnisses frühzeitig Maßnahmen gegen einen überhand nehmenden Schimmelpilzbefall ergreifen zu können und so umfangreiche Sanierungen, die kosten-, arbeits- und zeitintensiv sind, zu vermeiden.

Erfindungsgemäß wird diese Aufgabe dadurch gelöst, dass bei einem Verfahren zur Detektion von Schimmelpilzsporen in der Raumluft ein Zeolith-Substrat der Raumluft ausgesetzt wird, insbesondere ein zuvor dehydratisiertes Zeolith-Substrat der Raumluft ausgesetzt wird und wenigstens eine der nachfolgend genannten Messungen durchgeführt wird, wobei bei einer möglichen Messungen die Oberfläche des Zeolith-Substrats mit einer Lichtquelle beleuchtet und ein die Intensität des von der Oberfläche reflektierten Lichts repräsentierender Messwert erfasst wird und/oder bei einer anderen möglichen Messung ein die Leitfähigkeit und/oder Impedanz der Oberfläche des Zeolith-Substrats repräsentierender Messwert erfasst wird, wobei sodann in Abhängigkeit des wenigstens einen Messwertes, insbesondere in Abhängigkeit des Vergleiches des wenigstens einen Messwertes mit einem jeweiligen Vergleichswert ein Maß für den Besatz des Substrats und/oder der Beladung der Raumluft mit Schimmelpilzsporen gebildet wird.
Für eine erfindungsgemäße Messvorrichtung ist es demnach erfindungsgemäß weiterhin vorgesehen, dass diese ein besonders bevorzugt zuvor dehydratisiertes Zeolith-Substrat aufweist und eine Messeinrichtung aufweist zur Beleuchtung der Oberfläche des Zeolith-Substrats mit einer Lichtquelle und zur Erfassung eines die Intensität des von der Oberfläche reflektierten Lichts repräsentierenden Messwertes und/oder eine Messeinrichtung aufweist zur Erfassung eines die Leitfähigkeit und/oder Impedanz der Oberfläche des Zeolith-Substrats repräsentierenden Messwertes, wobei die wenigstens eine Messeinrichtung eingerichtet ist, in Abhängigkeit des wenigstens einen Messwertes, insbesondere in Abhängigkeit des Vergleiches des wenigstens einen Messwertes mit einem jeweiligen Vergleichswert ein Maß für einen Besatz des Substrats oder eine Beladung der Raumluft mit Schimmelpilzsporen zu bilden, insbesondere anzuzeigen, z.B. optisch, akustisch oder durch eine sonstige Meldung..
Das genannte Maß kann hier z.B. direkt aus dem wenigstens einen Messwert gebildet werden, z.B. durch eine Umrechnung des Messwertes. Der wenigstens eine Messwert selbst kann z.B. auch unmittelbar das Maß darstellen. Auch kann ein solches Maß in Abhängigkeit von zwei jeweiligen Messwerten der beiden genannten Messarten gebildet werden.

Der wesentliche Kerngedanke der Erfindung beruht darauf, dass sich Zeolith-Substrate als geeignet erweisen, Schimmelpilzsporen, die in der Raumluft auftreten, zumindest an deren Oberfläche zu adsorbieren, gegebenenfalls auch im Inneren zu absorbieren. Die Menge der adsorbierten und/oder absorbierten Schimmelpilzsporen an einem erfindungsgemäß eingesetzten Zeolith-Substrat kann demnach ein Maß bereitstellen für den Besatz des Substrats bzw. der Beladung der Raumluft mit Schimmelpilzsporen, da der Besatz des Substrats umso höher ist, je höher auch die Beladung der Raumluft mit den Schimmelpilzsporen ist. Erfindungsgemäß ist es somit vorgesehen, auf messtechnische Art und Weise den Besatz des Substrats zu erfassen durch Erfassung eines vom Sporenbesatz abhängigen Messwertes durch eine das Zeolith-Substrat prüfende Sensorik, um sodann in Abhängigkeit des Messwertes, bevorzugt in Abhängigkeit eines Vergleichs des wenigstens einen Messwertes mit einem jeweiligen Vergleichswert dieses gesuchte, eingangs genannte Maß zu bilden.

Es kann so schon relativ frühzeitig das Auftreten von Schimmelpilzsporen in der Raumluft festgestellt werden, so dass noch genügend Gegenmaßnahmen ergriffen werden können, bevor der Schimmelpilzbefall in einem Raum so hoch ist, dass bereits Sanierungsmaßnahmen ergriffen werden müssen. Die Erfindung ist demnach geeignet, einen höheren, durch Schimmelpilze hervorgerufenen Gebäudeschaden und damit einhergehende Risiken für die Nutzer dieser Gebäude zu vermeiden.

Die Erfindung macht sich dabei in bevorzugter Ausführungsform weiterhin zu Nutze, dass Schimmelpilze, die in Gebäuden auftreten, häufig zu den sogenannten Schlauchpilzen gehören, den Ascomycota. Solche Schimmelpilze sind einzellige oder fadenförmige Organismen, die in flüssigen oder feuchten Habitaten in großer Zahl vorkommen können und während ihrer sexuellen wie auch asexuellen Vermehrung in schlauchartigen Zellen (Ascus) Sporen ausbilden. Zu solchen Ascomycota zählen beispielsweise die als Schimmelpilze bezeichneten Vertreter der Gattungen Aspergillus, Penicillium oder Alternaria, wie beispielsweise Aspergillus flavus oder Aspergillus niger.

Solche Schimmelpilze, die unbewegliche, heteritrophe Organismen darstellen, haben Strategien entwickelt, um nach Verbrauch einer Nahrungsquelle neue Habitate zu besiedeln oder schlechte nahrungsarme Zeiten zu überdauern. Diese Strategien werden bei den Schimmelpilzen durch die Bildung verschiedener Sporen verwirklicht, die in Fruchtkörpern gebildet werden und aus einem Substrat heraus in den Luftraum wachsen können.

So können beispielsweise zunächst aus einem Hyphenkompartiment Stilchen herauswachsen, die sich senkrecht zum Substrat in den Luftraum erheben, terminal anschwellen und an der Vesikeloberfläche eine Lage von Zellen, die Metulae bilden. Diese produzieren die Phialiden, welche die eigentlichen Sporen bildenden Zellen darstellen, so dass schließlich Sporenketten gebildet werden können, die sogenannten Koniden, an deren jeweiliger Kettenspitze die älteste Spore zu finden ist. Solche Koniden sind pigmentiert und verleihen den Schimmelpilzen ihre Farbe.

Erfindungsgemäß wurde dabei gefunden, dass die Einleitung dieser Sporenentwicklung lichtinduziert und/oder feuchtigkeitsinduziert sein kann. So kann es demnach beispielsweise vorgesehen sein, dass eine Messung zur Detektion von Schimmelpilzsporen in Raumluft nur dann stattfindet, wenn ein vorgegebener Feuchtigkeitsgrenzwert in der Raumluft überschritten wird, da unterhalb eines solchen Grenzwertes eine Schimmelbildung nicht zu erwarten ist.

In einer alternativen oder auch mit der oder den zuvor genannten Ausbildungen kombinierbaren Weiterbildung kann es vorgesehen sein, die Messung der vorbeschriebenen Art(en) nur vorzunehmen, wenn die Umgebungshelligkeit am Ort einer Messvorrichtung, mit der die Messung vorgenommen wird, größer ist als eine vorbestimmte Mindesthelligkeit. Durch diese erfindungsgemäße Ausgestaltung wird dem Umstand Rechnung getragen, dass Schimmelpilze eine Lichtwahrnehmung aufweisen und die Sporenbildung dann einsetzt, wenn durch die aktiven Fotorezeptoren der Schimmelpilze eine ausreichende Umgebungshelligkeit detektiert wird.

Es kann daher erfindungsgemäß vorgesehen sein, in einer Messvorrichtung zur Durchführung des Verfahrens einen Helligkeitssensor zu integrieren, um die Umgebungshelligkeit festzustellen und in Abhängigkeit hiervon die wenigstens eine Messung vorzunehmen.

Ein solcher Helligkeitssensor kann auch in Entfall kommen, wenn die Messungen üblicherweise nur in einem Tageszeitintervall vorgenommen werden, in welchem von dem Bestehen der notwendigen Mindesthelligkeit auszugehen ist, wie beispielsweise zwischen 5.00 Uhr morgens und 20.00 Uhr abends. Selbstverständlich kann es auch vorgesehen sein, die Durchführung der Messung zu dem vorgenannten Tageszeitintervall nur dann vorzunehmen, wenn mit einem in Kombination eingesetzten Helligkeitssensor eine Mindesthelligkeit detektiert wird.

Alternativ, aber auch in kombinierender Weiterbildung mit den vorgenannten Ausführungen der Bestimmung, wann die wenigstens eine Messung vorzunehmen ist, kann es auch vorgesehen sein, mittels eines Temperatursensors die Raumlufttemperatur zu erfassen und die wenigstens eine Messung nur dann vorzunehmen, wenn ein Temperaturbereich von 15 - 35 Grad Celsius an Raumtemperatur gegeben ist. Auch diese Weiterbildung macht sich zu Nutze, dass Schimmelpilzsporen vorrangig in diesem Temperaturbereich gebildet werden, außerhalb dieses Temperaturbereichs jedoch nicht, oder zumindest nicht signifikant. Dies gilt besonders in Innenräumen für mesophile Schimmelpilze, wie beispielsweise der Gattung Penicillium, so dass durch diese Weiterbildung besonders dieser Art von Schimmelpilzen eine besondere Aufmerksamkeit gewidmet werden kann.

In einer bevorzugten Weiterbildung kann es vorgesehen sein, die eingangs beschriebene, wenigstens eine Messung zeitlich periodisch durchzuführen, beispielsweise in einem Abstand von wenigen Minuten, besonders bevorzugt in einem Abstand von 10 - 20 Minuten, insbesondere von 15 Minuten. Eine solche periodische Messung kann dabei in Kombination mit den vorherigen Ausführungen insbesondere nur dann vorgesehen sein, wenn eine entsprechende positive Prüfung der zuvor genannten Umweltbedingungen vorgelegen hat, also beispielsweise wenn der zuvor benannte Temperaturbereich gegeben ist und/oder die Mindesthelligkeit vorliegt und/oder das genannte vorbestimmte Tageszeitintervall gegeben ist.

In einer möglichen Ausführung der Erfindung kann es dabei vorgesehen sein, dass die beiden eingangs genannten Messungen, d.h. die Reflektionsmessung an der Oberfläche des Zeolith-Substrats sowie auch die Leitfähigkeitsmessung/Impedanzmessung an der Oberfläche des Zeolith-Substrats jeweils durchgeführt werden und nur dann auf eine Beladung der Raumluft mit Schimmelpilzsporen bzw. auf ein Besatz des Substrats mit Schimmelpilzsporen geschlossen wird, wenn die beiden jeweiligen Messwerte gleichzeitig von einem jeweiligen Vergleichsbetrag um einen vorgegebenen Betrag abweichen. Es erfolgt demnach eine Doppelprüfung, bei der auf einen entsprechenden Schimmelpilzfall nur dann geschlossen wird, wenn beide Messverfahren eine positive Prüfung ergeben. Statt beide. Messwerte mit einem jeweiligen Vergleichswert zu vergleichen kann es auch vorgesehen sein durch eine Berechnung aus beiden Werten ein Maß für den Besatz / die Beladung zu bilden.

In einer alternativen Ausführung kann es auch vorgesehen sein, zunächst nur eine der Messungen durchzuführen und im Anschluss daran die andere nur dann durchzuführen, wenn das Ergebnis der vorherigen Messung ein Maß für den Besatz des Substrats und/oder der Beladung der Raumluft mit Schimmelpilzsporen ergibt, das über einen vorbestimmten Grenzwert liegt. Bevorzugt wird hier zuerst die Reflektionsmessung durchgeführt und im Anschluss daran die Leitfähigkeitsmessung/Impedanzmessung, wenn die Reflektionsmessung ein Schimmelpilzsporen anzeigendes positives Ergebnis geliefert hat.

Unabhängig von der Reihenfolge oder der Frage, ob eine Messung alleinig oder zusammen mit der jeweils anderen durchgeführt wird, ist es bevorzugt vorgesehen, für die Reflektionsmessung eine Lichtquelle einzusetzen, mit der polarisiertes Licht emitiert wird, da die Änderungen der Reflektion in Abhängigkeit vom Besatz des Zeolith-Substrats mit Schimmelpilzsporen für polarisiertes Licht deutlicher hervortritt als für unpolarisiertes Licht. Dennoch ist selbstverständlich, insbesondere bei entsprechend sensitiver Auslegung eines Lichtsensors zur Messung der Reflektionsintensität die Möglichkeit gegeben, auch mit unpolarisiertem Licht zu arbeiten.

Bevorzugt und insbesondere in Kombination mit wenigstens einer der vorherigen Ausführungen kann es vorgesehen sein, eine Lichtquelle einzusetzen, mit der infrarotes Licht imitiert wird, insbesondere somit Licht von Wellenlängen größer 800 Nanometer.

Hier kann es in einer möglichen, die Erfindung nicht beschränkenden Ausgestaltung beispielsweise vorgesehen sein, Licht in einem Wellenlängenbereich von 800 - 1.200 Nanometer zu verwenden oder noch längerwelliges Licht von beispielsweise 4,2 Mikrometer. Die Auswahl der Wellenlänge des Lichtes und somit der einzusetzenden Lichtquelle kann hierbei in Abhängigkeit davon erfolgen, welche Arten von Schimmelpilzsporen bevorzugt detektiert werden sollen, um sodann anhand von deren typischen Reflektionseigenschaften die geeignete Lichtquelle und/oder einen geeigneten Lichtsensor zur Messung der Reflektionsintensität zu verwenden.

In einer besonderen Ausgestaltung kann es auch vorgesehen sein, eine Lichtquelle einzusetzen, die in ihrem Wellenlängenbereich durchstimmbar ist, um so die Intensität des reflektierten Lichtes mit einem entsprechend breitbandig ausgelegten Lichtempfänger in Abhängigkeit der Wellenlänge aufzunehmen, so dass aus den mehreren wellenlängenabhängig erfassten Messwerten auch die Möglichkeit eingeräumt ist, ein wellenlängenabhängiges Maß des Besatzes des substrats oder der Beladung der Luft zu bilden, z.B. um so auf die Art der an dem Zeolith-Substrat anhaftenden Schimmelpilzsporen zu schließen, beispielsweise auch um die Gefährlichkeit der Schimmelpilzsporen einschätzen zu können.

Bei einer Leitfähigkeitsmessung/Impedanzmessung, die bevorzugt nur auf die Oberfläche des Zeolith-Substrats abstellt, kann es in einer besonders bevorzugten Ausführungsform vorgesehen sein, die komplexe Impedanz des Zeolith-Substrats zu vermessen, zumindest bei einer Messfrequenz, gegebenenfalls auch unter Nutzung mehrerer Messfrequenzen. Messfrequenzen, d.h. die Frequenzen des zur Leitfähigkeitsmessung/Impedanzmessung eingesetzten Prüfstroms können z.B. 60, 120, 240, 480 oder 960 Kilohertz sein. Diese Werte stellen lediglich Beispiele dar, es besteht selbstverständlich die Möglichkeit, entsprechend andere Frequenzen im Kilohertzbereich zu wählen.

Es besteht sodann die Möglichkeit, den komplexen Wert der Impedanz rechentechnisch z.B. mit einer in der Messvorrichtung vorhandenen Auswerteelektronik in einen elektrischen Leitfähigkeitswert umzurechnen und diesen als eingangs genanntes Maß heranzuziehen.

Gegebenenfalls kann als Maß auch unmittelbar die Größe eines über die Oberfläche des Zeolith-Substrats fließenden Stroms herangezogen werden oder aus dessen Größe das Maß berechnet werden. Bevorzugt handelt es sich bei dem Prüfstrom bei einer bestimmten angelegten Spannung um einen hochfrequenten Strom, z.B. im Kilohertzbereich, insbesondere so dass aufgrund des eintretenden Skineffektes im Wesentlichen nur auf der Oberfläche fließender Strom erzeugt wird, der unmittelbar durch den Besatz des Zeolith-Substrats mit Schimmelpilzsporen beeinflusst ist.

So wird insbesondere sowohl bei dieser Messung als auch bei der zuvor genannten auf die komplexe Impedanz abstellenden Messung gewährleistet, dass Leitfähigkeitsmessungen/Impedanzmessungen über das Volumen des Zeolith-Substrats unterdrückt bzw. deren Einfluss zumindest reduziert wird, da die Leitfähigkeit/Impedanz über das Volumen des Zeolith-Substrats beispielsweise auch von alternativen Größen wie die Luftfeuchtigkeit, die im Inneren des Zeoliths absorbiert werden kann, beeinflussbar ist. Es kann so durch diese elektrischen Messprinzipien selektiv auf die Überprüfung von der Leitfähigkeit/Impedanz der Oberfläche abgestellt werden.

In einer bevorzugten Weiterbildung des erfindungsgemäßen Verfahrens bzw. auch der Messvorrichtung kann es vorgesehen sein, dass die Messvorrichtung in einem Rauchwarnmelder integriert ist, so dass die Messung dementsprechend an einem in einem Rauchwarnmelder angeordneten Zeolith-Substrat vorgenommen werden kann. Dies hat den Vorteil, dass ein ohnehin in Räumen, insbesondere in den Räumen von Mietwohnungen, vorgesehener Rauchwarnmelder verwendet wird, ohne dass in einem Raum eine separate Vorrichtung zur Schimmelpilzdetektion anzuordnen ist.

Es kann dabei vorgesehen sein, dass eine Messvorrichtung zur Durchführung des beschriebenen Verfahrens eine separate Einheit in einem Rauchwarnmelder darstellt, die lediglich in demselben Gehäuse des Rauchwarnmelders integriert ist, aber autark arbeitet, ggfs. nur dieselbe Energiequelle, z.B. eine Batterie nutzt.

In einer anderen Ausführungsform besteht aber auch die Möglichkeit, für die Durchführung der zuvor beschriebenen, wenigstens einen, bevorzugt der beiden verschiedenen Messungen, zumindest zu einem Teil auf die Elektronik und/oder Optik des Rauchwarnmelders zurückzugreifen. Hierdurch wird der Bauteilaufwand reduziert und somit auch die gesamten Kosten einer erfindungsgemäßen Messvorrichtung.

Beispielsweise kann es vorgesehen sein, dass die Messung und/oder Auswertung eines Messergebnisses sowohl bei der erfindungsgemäßen Messvorrichtung als auch bei dem Rauchwarnmelder durch ein- und dieselbe gemeinsame Elektronik durchgeführt wird.

Auch besteht die Möglichkeit, die Optik des Rauchwarnmelders einzusetzen, um die eingangs genannte Reflektionsmessung am Zeolith-Substrat durchzuführen. So kann es beispielsweise vorgesehen sein, dass zur Messung der Lichtreflektion das Zeolith-Substrat im Strahlengang der optischen Streulichtsensoranordnung eines auf dem Streulichtprinzip beruhenden Rauchwarnmelders angeordnet wird, beispielsweise wofür in Strahlrichtung nach einem mittels eines Streulichtsensors überwachten Streupunkt das Zeolith-Substrat angeordnet wird, so dass einerseits mit einem Lichtsensor der konkrete Streupunkt des Rauchwarnmelders bezogen auf Streuung an Partikeln überwacht wird, die durch Rauchgase entstehen und zum anderen dasselbe zur Streuung verwendete Licht an dem Zeolith-Substrat reflektiert und mittels eines bevorzugt separaten Lichtsensors zur Durchführung der erfindungsgemäßen Messung erfasst wird.

Bei dem erfindungsgemäßen Verfahren kann es weiterhin, insbesondere dann, wenn die Messvorrichtung in einen Rauchwarnmelder integriert ist, aber auch ohne eine solche Integration vorgesehen sein, dass nach einer erfolgten Detektion von Schimmelpilzsporen, z.B. wenn das festgestellte Maß einen Grenzwert überschreitet, eine Warnmeldung erfolgt. Eine solche Warnmeldung kann von der erfindungsgemäßen Messvorrichtung, bevorzugt von einem Rauchwarnmelder, in welchem diese integriert ist, z.B. per Funk als ein Datentelegramm in einem Funknetzwerk zu einer Zentrale versendet werden, die das empfangene Telegramm auswertet und gegebenenfalls weitere Dienste veranlasst. Bei einem solchen weiteren veranlassten Dienst kann es sich z.B. um eine Warnmeldung an die Bewohner der Wohnung handeln, in deren Raum eine Schimmelpilzdetektion erfolgte. Beispielsweise kann auch ein Vermieter, ein Hausmeister oder ein sonstiger Dienst informiert werden. Auch kann die Messvorrichtung unmittelbar, z.B. an dessen Gehäuse eine Warnung signalisieren, z.B. akustisch oder optisch.

Die für die Zwecke der Erfindung einsetzbaren Zeolith-Substrate umfassen Zeolithe, die aus Kationen und Anionen aufgebaut sind und der allgemeinen Oxidformel M_{2/n}Al₂O₃ x SiO₂ yH₂O entsprechen, wobei der Platzhalter M das jeweilige Kation, n die Ladung der Kationen darstellt, x eine Zahl größer gleich 2 ist und y die Anzahl von Wassermolekülen darstellt.

Durch solche Zeolithe werden sogenannte Gerüstsilikate oder Klinoptilolith-Zeolithe gebildet, die eine Vielzahl von Hohlräumen und Kanälen innerhalb des gebildeten Kristalls aufweisen.

## Patentansprüche

1. Verfahren zur Detektion von Schimmelpilzsporen in Raumluft, **dadurch gekennzeichnet, dass** ein insbesondere dehydratisiertes Zeolith-Substrat der Raumluft ausgesetzt wird und wenigstens eine der folgenden Messungen durchgeführt wird:
a. es wird die Oberfläche des Zeolith-Substrats mit einer Lichtquelle beleuchtet und ein die Intensität des von der Oberfläche reflektierten Lichts repräsentierender Messwert erfasst
b. es wird ein die Leitfähigkeit und/oder Impedanz der Oberfläche des Zeolith-Substrats repräsentierender Messwert erfasst
und in Abhängigkeit des wenigstens einen Messwertes, insbesondere in Abhängigkeit des Vergleiches des wenigstens einen Messwertes mit einem jeweiligen Vergleichswert ein Maß für den Besatz des Substrats und/oder die Beladung der Raumluft mit Schimmelpilzsporen gebildet wird.

2. Verfahren nach Anspruch 1, **dadurch gekennzeichnet, dass** die wenigstens eine Messung zeitlich periodisch wiederholt wird, insbesondere in einem Abstand von 10 bis 20 Minuten, bevorzugt 15 Minuten.

3. Verfahren nach einem der vorherigen Ansprüche, **dadurch gekennzeichnet, dass** mittels eines Temperatursensors die Raumlufttemperatur erfasst wird und die Messung nur vorgenommen wird in einem Temperaturbereich von 15 bis 35 Grad Celsius.

4. Verfahren nach einem der vorherigen Ansprüche, **dadurch gekennzeichnet, dass** die Messung nur vorgenommen wird, wenn die Umgebungshelligkeit am Ort einer Messvorrichtung, mit der die Messung vorgenommen wird, größer ist als eine vorbestimmte Mindesthelligkeit, insbesondere zwischen 5 Uhr morgen und 20 Uhr abends.

5. Verfahren nach einem der vorherigen Ansprüche, **dadurch gekennzeichnet, dass** beide Messungen a) und b) vorgenommen werden und die gleichzeitige Abweichung des jeweiligen Messwertes von einem jeweiligen Vergleichswert um einen jeweiligen Betrag geprüft wird und auf eine Beladung der Raumluft mit Schimmelpilzsporen geschlossen wird, wenn der Betrag überschritten ist.

6. Verfahren nach einem der vorherigen Ansprüche, **dadurch gekennzeichnet, dass** zunächst Messung a) vorgenommen wird und Messung b) nur durchgeführt wird, wenn das Ergebnis der Messung a) ein Maß für den Besatz des Substrats und/oder die Beladung der Raumluft mit Schimmelpilzsporen ergibt, welches über einem vorbestimmten Grenzwert liegt.

7. Verfahren nach einem der vorherigen Ansprüche, **dadurch gekennzeichnet, dass** die Messungen an einem Zeolith-Substrat vorgenommen werden, welches in einem Rauchwarnmelder angeordnet ist, insbesondere wenigstens zum Teil mit der Elektronik und/oder Optik des Rauchwarnmelders.

8. Verfahren nach Anspruch 7, **dadurch gekennzeichnet, dass** zur Messung der Lichtreflexion das Zeolith-Substrat im Strahlengang einer optischen Streulichtsensor-Anordnung des Rauchwarnmelders angeordnet wird, insbesondere in Strahlrichtung nach einem mittels eines Streulichtsensors überwachten Streupunkt.

9. Verfahren nach einem der vorherigen Ansprüche 7 oder 8, **dadurch gekennzeichnet, dass** nach einer erfolgten Detektion von Schimmelpilzsporen der Rauchwarnmelder eine Warnmeldung abgibt, insbesondere per Funk ein Datentelegramm in ein Funknetzwerk zu einer Zentrale versendet.

10. Messvorrichtung zur Schimmelpilzdetektion, **dadurch gekennzeichnet, dass** sie ein insbesondere dehydratisiertes Zeolith-Substrat aufweist und eine Messeinrichtung aufweist zur Beleuchtung der Oberfläche des Zeolith-Substrats mit einer Lichtquelle und zur Erfassung eines die Intensität des von der Oberfläche reflektierten Lichts repräsentierenden Messwerts und/oder eine Messeinrichtung aufweist zur Erfassung eines die Leitfähigkeit und/oder Impedanz der Oberfläche des Zeolith-Substrats repräsentierenden Messwerts, wobei die wenigstens eine Messeinrichtung eingerichtet ist, in Abhängigkeit des wenigstens einen Messwertes, insbesondere in Abhängigkeit eines Vergleiches des wenigstens einen Messwertes mit einem jeweiligen Vergleichswert ein Maß für einen Besatz des Substrats oder eine Beladung der Raumluft mit Schimmelpilzsporen anzuzeigen.

11. Rauchwarnmelder, **dadurch gekennzeichnet, dass** in den Rauchwarnmelder eine Messvorrichtung nach Anspruch 10 integriert ist.

12. Rauchwarnmelder nach Anspruch 11, **dadurch gekennzeichnet, dass** die Messeinrichtung zur Erfassung der Intensität des von der Oberfläche des Zeolith-Substrats reflektierten Lichts zumindest zum Teil optische und/ oder elektronische Komponenten, insbesondere eine Lichtquelle, einer Rauch-Streulichtsensor-Anordnung des Rauchwarnmelders umfasst.

## Claims

1. Method for detecting mould spores in ambient air, **characterized in that** an in particular dehydrated zeolite substrate is exposed to the ambient air and at least one of the following measurements is carried out:
a. the surface of the zeolite substrate is illuminated with a light source and a measured value representing the intensity of the light reflected from the surface is recorded,
b. a measured value representing the conductivity and/or impedance of the surface of the zeolite substrate is recorded
and, depending on the at least one measured value, in particular depending on the comparison of the at least one measured value with a respective comparative value, a measure of the occupancy of the substrate and/or the loading of the ambient air with mould spores is formed.

2. Method according to Claim 1, **characterized in that** the at least one measurement is repeated periodically over time, in particular at an interval of 10 to 20 minutes, preferably 15 minutes.

3. Method according to one of the preceding claims, **characterized in that** the ambient air temperature is recorded by means of a temperature sensor and the measurement is performed only in a temperature range from 15 to 35 degrees Celsius.

4. Method according to one of the preceding claims, **characterized in that** the measurement is performed only when the ambient lightness at the location of a measuring device with which the measurement is performed is greater than a predetermined minimum lightness, in particular between 5 a.m. and 8 p.m.

5. Method according to one of the preceding claims, **characterized in that** both measurements a) and b) are performed and the simultaneous deviation of the respective measured value from a respective comparative value by a respective amount is checked and loading of the ambient air with mould spores is concluded if the amount is exceeded.

6. Method according to one of the preceding claims, **characterized in that** measurement a) is performed first and measurement b) is carried out only when the result of measurement a) gives a measure of the occupancy of the substrate and/or the loading of the ambient air with mould spores which lies above a predetermined limiting value.

7. Method according to one of the preceding claims, **characterized in that** the measurements are performed on a zeolite substrate which is arranged in a smoke alarm, in particular at least to some extent with the electronics and/or optics of the smoke alarm.

8. Method according to Claim 7, **characterized in that** in order to measure the light reflection, the zeolite substrate is arranged in the beam path of an optical scattered light sensor arrangement of the smoke alarm, in particular in the beam direction after a scattering point monitored by means of a scattered light sensor.

9. Method according to one of the preceding Claims 7 or 8, **characterized in that** after a detection of mould spores has been carried out, the smoke alarm outputs a warning message, in particular sends a data telegram to a central control station by radio in a radio network.

10. Measuring device for mould detection, **characterized in that** it has an in particular dehydrated zeolite substrate and has a measuring apparatus for illuminating the surface of the zeolite substrate with a light source and for recording a measured value representing the intensity of the light reflected from the surface, and/or has a measuring apparatus for recording a measured value representing the conductivity and/or impedance of the surface of the zeolite substrate, wherein the at least one measuring apparatus is configured to indicate a measure of an occupancy of the substrate or a loading of the ambient air with mould spores, depending on the at least one measured value, in particular depending on a comparison of the at least one measured value with a respective comparative value.

11. Smoke alarm, **characterized in that** a measuring device according to Claim 10 is integrated into the smoke alarm.

12. Smoke alarm according to Claim 11, **characterized in that** the measuring apparatus for recording the intensity of the light reflected from the surface of the zeolite substrate comprises, at least to some extent, optical and/or electronic components, in particular a light source, of a smoke scattered light sensor arrangement of the smoke alarm.

## Revendications

1. Procédé de détection de la présence de spores de champignons dans l'air d'un local, **caractérisé en ce qu'**un substrat de zéolite, notamment déshydraté, est exposé à l'air du local et **en ce qu'**au moins l'une des mesures suivantes est exécutés :
a. la surface du substrat de zéolite est éclairée par une source de lumière et une valeur de mesure qui représente l'intensité de la lumière réfléchie par la surface est mesurée,
b. une valeur de mesure qui représente la conductivité et/ou l'impédance de la surface du substrat de zéolite est saisie et
en fonction de la ou des valeurs de mesure et en particulier en fonction de la comparaison entre la ou les valeurs de mesure et des valeurs de comparaison respectives, une mesure de la couverture du substrat et/ou de la charge de l'air du local par des spores de champignons est formée.

2. Procédé selon la revendication 1, **caractérisé en ce que** la ou les mesures sont répétées périodiquement, en particulier à un intervalle de 10 à 20 minutes et de préférence de 15 minutes.

3. Procédé selon l'une des revendications précédentes, **caractérisé en ce que** la température du local est saisie au moyen d'un capteur de température et **en ce que** la mesure n'est réalisée que dans une plage de températures comprises entre 15 et 35 degrés Celsius.

4. Procédé selon l'une des revendications précédentes, **caractérisé en ce que** la mesure n'est réalisée que si la luminosité ambiante à l'endroit de l'ensemble de mesure avec lequel la mesure est réalisée est supérieure à une luminosité minimale prédéterminée, et est réalisée en particulier entre 5 heures du matin et 20 heures le soir.

5. Procédé selon l'une des revendications précédentes, **caractérisé en ce que** les deux mesures a) et b) sont réalisées, l'écart simultané entre chaque valeur de mesure et chaque valeur comparative par rapport à un niveau donné est vérifié et on conclut que l'air du local est chargé en spores de champignons lorsque ce niveau a été dépassé.

6. Procédé selon l'une des revendications précédentes, **caractérisé en ce que** la mesure a) est réalisée en premier lieu et la mesure b) n'est réalisée que si les résultats de la mesure a) donnent une mesure de la couverture du substrat et/ou de la charge de l'air du local par des spores de champignons qui est supérieure à une valeur limite prédéterminée.

7. Procédé selon l'une des revendications précédentes, **caractérisé en ce que** les mesures sont réalisées sur un substrat de zéolite disposé dans un avertisseur de fumée, en particulier en partie avec l'électronique et/ou l'optique de l'avertisseur de fumée.

8. Procédé selon la revendication 7, **caractérisé en ce que** pour mesurer la réflexion de la lumière, le substrat de zéolite est disposé dans le parcours des rayons d'un agencement de capteurs de lumière diffuse de l'avertisseur de fumée et en particulier dans la direction du rayonnement après un point de diffusion surveillé au moyen du capteur de lumière diffuse.

9. Procédé selon l'une des revendications 7 ou 8 qui précèdent, **caractérisé en ce qu'**après détection de la présence de spores de champignons, l'avertisseur de fumée délivre un avertissement et en particulier envoie par radio un télégramme de données à une centrale d'un réseau radio.

10. Ensemble de mesure servant à détecter des champignons, **caractérisé en ce qu'**il présente un substrat de zéolite en particulier déshydraté et un dispositif de mesure qui éclaire la surface du substrat de zéolite par une source de lumière et qui détecte une valeur de mesure qui représente l'intensité de la lumière réfléchie par la surface et/ou qui présente un dispositif de mesure qui saisit une valeur de mesure qui représente la conductivité et/ou l'impédance de surface du substrat de zéolite, le ou les dispositifs de mesure étant conçus pour indiquer en fonction de la ou des valeurs de mesure et en particulier en fonction d'une comparaison entre la et les valeurs de mesure avec des valeurs comparatives respectives une mesure de la couverture du substrat ou de la charge de l'air du local par des spores de champignons.

11. Avertisseur de fumée **caractérisé en ce qu'**un ensemble de mesure selon la revendication 10 est intégré dans l'avertisseur de fumée.

12. Avertisseur de fumée selon la revendication 11, **caractérisé en ce que** le dispositif de mesure qui saisit l'intensité de la lumière réfléchie par la surface du substrat de zéolite comporte au moins en partie des composants optiques et/ou des composants électroniques, en particulier une source de lumière et un ensemble de capteur de lumière diffusée par la fumée prévus dans l'avertisseur de fumée.
